(19) **Europäisches Patentamt**

**European Patent Office**

**Office européen des brevets**

(11) **EP 1 662 472 A2**

(12) **EUROPEAN PATENT APPLICATION**

(43) Date of publication:
**31.05.2006 Bulletin 2006/22**

(51) Int Cl.:
**G09G 3/36** (2006.01)

(21) Application number: **05026093.4**

(22) Date of filing: **30.11.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **30.11.2004 JP 2004347535**

(71) Applicant: **SANYO ELECTRIC CO., LTD.**
**Moriguchi-shi, Osaka 570-8677 (JP)**

(72) Inventors:
• **Senda, Michiru**
**Gifu-shi**
**Gifu-ken, 502-0911 (JP)**

• **Kobayashi, Mitsugu**
**Nagoya-shi**
**Aichi-ken, 458-0005 (JP)**
• **Tsutsui, Yusuke**
**Anpachi-gun**
**Gifu-ken, 503-0115 (JP)**

(74) Representative: **Skuhra, Udo**
**Reinhard-Skuhra-Weise & Partner GbR**
**Patentanwälte**
**Postfach 44 01 51**
**80750 München (DE)**

(54) **Liquid crystal display device**

(57) An LCD device driven with storage capacitors prevents defective image display caused by capacitive coupling between data lines and storage capacitor lines. The LCD device includes pixel electrodes (21) arranged at intersections between drain lines (14) and gate lines (15), switching elements (20), storage capacitor lines (16, 17) corresponding to the gate lines, storage capacitors (25) having first electrodes connected to the pixel electrodes and second electrodes connected to the storage capacitor lines, a switching circuit (18) for selectively applying a potential to the storage capacitor lines, and a drain driver (12). The drain driver selects some of the data lines so that an equal number of image data signals having a positive polarity and image data signals having a negative polarity are provided to the selected data lines and simultaneously provides the selected data lines with the image data signals having a positive polarity and the image data signals having a negative polarity.

**Fig.4**

## Description

The present invention relates to a liquid crystal display (LCD) device, and more particularly, to an LCD device that is driven with storage capacitors.

An LCD includes a liquid crystal material that is sealed in a small space between two glass substrates. The light transmittance of the liquid crystal material changes in accordance with the applied voltage. The LCD displays images by controlling the voltage applied to each pixel and changing the light transmittance of the liquid crystal material. The liquid crystal material deteriorates as potentials having the same polarity are repeatedly applied to the liquid crystal material. To prevent deterioration of the liquid crystal material, the LCD device cyclically inverts the polarities of the potentials applied to pixel electrodes.

Two polarity inversion driving methods are known. The first one is a line inversion driving method for alternately applying potentials having opposite polarities to gate lines, which are connected to pixel electrodes. The second one is a dot inversion driving method for alternately applying potentials having opposite polarities to pixel electrodes for pixels arranged in both row and column directions. With the line inversion driving method, potentials having the same polarity are applied to every one of the pixels that are connected to the same gate line. This enables the use of an image data signal having a relatively small potential amplitude. However, the line inversion driving method is susceptible to flicker noise. This makes it difficult to drive the LCD device at a low frequency. With the dot inversion driving method, potentials having opposite polarities are alternately applied to pixel electrodes that are connected to the same gate line. Although the dot inversion driving method is immune to flicker noise, the potential amplitude of the image data signal must be increased. This makes it difficult to reduce power consumption.

In the prior art, for example, Japanese Laid-Open Patent Publication Nos. 2000-81606 and 2003-150127 describe LCD devices that enable the potential amplitudes of image data signals to be decreased while performing the dot inversion driving method. Such an LCD device includes storage capacitors, each having a first electrode connected to a pixel electrode and a second electrode connected to a storage capacitor line. The LCD device performs storage capacitor driving to increase the amplitude of the image data signal by changing the potential applied to the storage capacitor line after applying the image data signal potential to a pixel electrode. This decreases the potential amplitude of the image data signal.

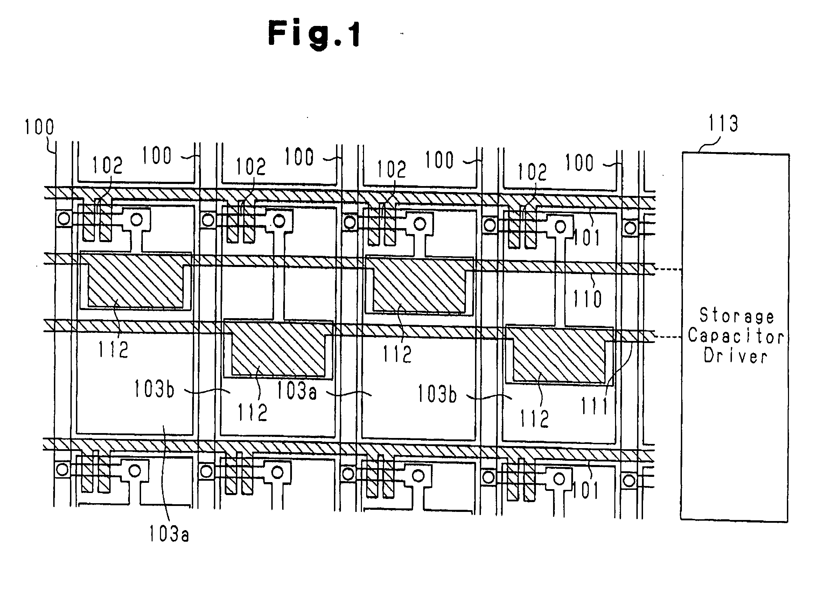

An LCD device of the prior art that performs storage capacitor driving will now be described with reference to Fig. 1.

An image display unit of the LCD device includes a plurality of drain lines 100 and a plurality of gate lines 101 that intersect one another. The drain lines 100 are data lines for providing image data signals to a plurality of pixel electrodes. A switching element 102 and pixel electrodes 103a and 103b are arranged at each intersection of a drain line 100 and a gate line 101. The switching element 102 may be a thin film transistor (TFT). Each switching element 102 has a gate connected to the corresponding gate line 101, a source connected to the corresponding pixel electrode 103a or 103b, and a drain connected to the corresponding drain line 100. A substrate (not shown) on which the pixel electrode 103a or 103b and the switching element 102 are formed is opposed to a substrate on which a plurality of opposing electrodes are formed with liquid crystal material arranged in between the substrates. The pixel electrodes 103a and 103b and the opposing electrodes form a liquid crystal capacitor.

The LCD device further includes first and second storage capacitor lines 110 and 111 for each gate line 101. A plurality of storage capacitors 112 are arranged at the intersections between the plurality of drain lines and the plurality of gate lines. Each storage capacitor 112 includes a first electrode, which is connected to the corresponding one of the pixel electrodes 103a and 103b, and a second electrode, which is connected to the corresponding one of the first and second storage capacitor lines 110 and 111. In detail, the storage capacitors 112 are alternately connected to the first and second storage capacitor lines 110 in the row and column directions of the pixel array. More specifically, the storage capacitor 112 of one pixel electrode 103a is connected to the first storage capacitor line 110, and the storage capacitors 112 of the pixel electrodes 103b adjacent in the left, right, upper, and lower directions are connected to the second storage capacitor lines 111.

The storage capacitor lines 110 and 111 are connected to a storage capacitor driver 113. The storage capacitor driver 113 includes a switching circuit for selectively switching the potential that is applied to the storage capacitor lines 110 and 111.

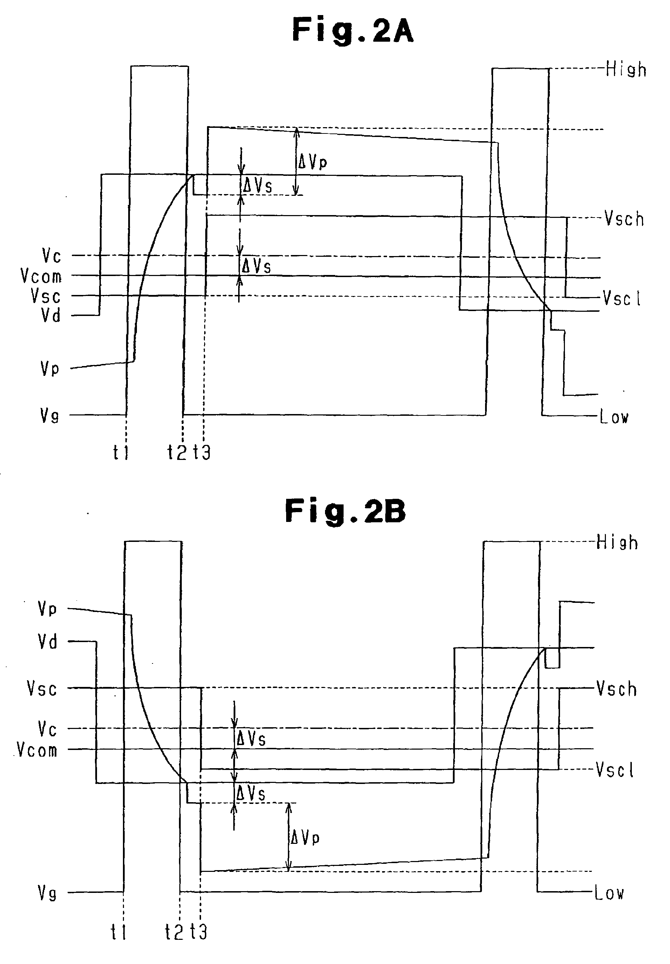

The method for driving the pixel electrodes 103a and 103b of the LCD device will now be described with reference to Fig. 2.

Fig. 2(A) shows a driving method in which an image data signal Vd, which has positive polarity, is provided to a pixel electrode 103a connected to a first storage capacitor line 110 via a storage capacitor 112 in a predetermined frame.

As shown in Fig. 2(A), in each frame, a gate potential Vg applied to the gate line 101 rises once from a low potential level (L level) to a high potential level (H level). The gate potential Vg is maintained at an H level for a constant period and then falls again to an L level. In Fig. 2(A), the gate potential Vg is maintained at an H level from timing t1 to timing t2.

When the gate potential Vg rises to an H level at timing t1, the source and the drain of the switching element 102 are connected to each other so that the image data signal Vd is provided to the pixel electrodes 103a via the drain line 100. The potential (pixel potential) Vp of the pixel electrodes 103a increases to substantially the same level as the level of the potential of the image data signal Vd.

When the gate potential Vg falls to an L level at timing t2, the source and the drain of the switching element 102 are disconnected from each other. When the gate potential Vg falls, the pixel potential Vp, which has increased to substantially the same level as the level of the potential of the image data signal Vd, is decreased by an amount ΔVs. The potential of the opposing electrode (opposing electrode potential Vcom) always remains constant. The constant potential is predetermined so that is has a level lower than a median level Vc of the potential of the image data signal Vd by the decrease amount ΔVs of the pixel potential Vp (Vcom = Vc - ΔVs).

At timing t3 that is immediately after the fall of the gate potential Vg, the potential of the signal applied to each of the storage capacitor lines 110 and 111 (hereafter referred to as the storage capacitor potential Vsc) is inverted. The storage capacitor potential Vsc is set at either an H level Vsch or an L level Vscl. The H level Vsch is higher than the opposing electrode potential Vcom. The L level Vscl is lower than the opposing electrode potential Vcom. The storage capacitor potential Vsc applied to the first storage capacitor line 110 always has a level that differs from the storage capacitor potential Vsc applied to the second storage capacitor line 111. More specifically, when the potential of an H level Vsch is applied to the first storage capacitor line 110, the potential of an L level Vscl is applied to the second storage capacitor line 111. When the potential of an L level Vscl is applied to the first storage capacitor line 110, the potential of an H level Vsch is applied to the second storage capacitor line 111.

In a frame in which the image data signal Vd having a positive polarity is provided to the pixel electrode 103a, the storage capacitor potential Vsc rises from an L level Vscl to an H level Vsch at timing t3. The rise of the storage capacitor potential Vsc causes charge to be redistributed between the liquid crystal capacitor and the storage capacitor 112. The charge redistribution increases the pixel potential Vp by an amount ΔVp. The increased pixel potential Vp is held until the gate potential Vg rises again in the next frame.

Fig. 2(B) shows a driving method in which an image data signal Vd, which has a negative polarity is provided to a pixel electrode 103b connected to a second storage capacitor line 111 via a storage capacitor 112 in the same frame as in Fig. 2(A).

The gate potential Vg rises to an H level at timing t1 and connects the source and the drain of the switching element 102. As a result, the image data signal is provided to the pixel electrode 103b via the drain line 100. The pixel potential Vp decreases to substantially the same level as the level of the potential of the image data signal Vd.

The gate potential Vg falls to an L level at timing t2 and disconnects the source and the drain of the switching element 102. When the gate potential Vg falls, the pixel potential Vp, which has decreased to substantially the same level as the level of the potential of the image data signal Vd, is further decreased by an amount ΔVs.

In the pixel electrode 103b, the storage capacitor potential Vsc falls from an H level Vsch to an L level Vscl at timing t3 that is immediately after timing t2. The fall of the storage capacitor potential Vsc causes charge to be redistributed between the liquid crystal capacitor and the storage capacitor 112. As a result, the pixel potential Vp further decreases by an amount ΔVp. The decreased pixel potential Vp is held until the gate potential Vg rises again in the next frame.

In the next frame, the polarity of the potential of the image data signal Vd provided to each of the pixel electrodes 103a and 103b is inverted. The pixel electrodes 103a and 103b are driven in a manner opposite to the preceding frame. More specifically, the pixel electrode 103a is driven in the manner shown in Fig. 2(B), and the pixel electrode 103b is driven in the manner shown in Fig. 2(A).

In the LCD device that performs the above storage capacitor driving, the polarity inversion of the potential applied to each of the storage capacitor lines 110 and 111 amplifies the pixel potential Vp. In this case, even if the potential level of the image data signal is relatively small, the potential of each of the pixel electrodes 103a and 103b is held at a sufficiently high level. This enables the LCD device that performs storage capacitor driving to reduce the potential amplitudes of image data signals during horizontal scanning and lower power consumption, while employing the dot inversion driving method.

In the LCD device that performs the above storage capacitor driving, the drain lines 100 and the storage capacitor lines 110 and 111 are laid out so as to intersect one another. This forms a parasitic capacitor at each intersection of the drain line 100 and the storage capacitor line 110 or 111 and causes capacitive coupling between the lines. In this case, the storage capacitor potential Vsc of each of the storage capacitor lines 110 and 111 changes when the image data signal is provided to the drain line 100 thereby changing the potential of the drain line 100.

The storage capacitor lines 110 and 111 are connected to the storage capacitor driver 113. The storage capacitor driver 113 includes the switching circuit, which switches the potential applied to each of the storage capacitor lines 110 and 111 between an H level Vsch and an L level Vscl. The switching circuit of the storage capacitor driver 113 is required to have a high driving capacity to invert the polarity of the storage capacitor potential Vsc as described above. This increases the impedance of the switching circuit. As a result, each of the storage capacitor lines 110 and 111 connected to the switching circuit has high impedance. When the storage capacitor lines 110 and 111 have high impedance, once the potential changes, this influence remains for a relatively long time. Such change in potential of the storage capacitor lines 110 and 111 may affect the potentials of image data signals provided to the pixel electrodes 103a and 103b via the drain lines 100 or the potentials of the pixel electrodes 103a and 103b. This may lead to a defective image display.

The present invention provides an LCD device that prevents defective image display that may be caused by capacitive coupling occurring between data lines and storage capacitor lines.

One embodiment of the present invention is a liquid crystal display device including a plurality of data lines. A plurality of gate lines intersect the plurality of data lines. A plurality of pixel electrodes are respectively arranged at intersections between the plurality of data lines and the plurality of gate lines. The liquid crystal device further has a plurality of switching elements, each including a control terminal connected to a corresponding one of the plurality of gate lines, a first terminal connected to a corresponding one of the plurality of pixel electrodes, and a second terminal connected to a corresponding one of the plurality of data lines. A plurality of storage capacitor lines respectively correspond to the plurality of gate lines. The liquid crystal device also has a plurality of storage capacitors, each including a first capacitor electrode connected to a corresponding one of the plurality of pixel electrodes and a second capacitor electrode connected to a corresponding one of the plurality of storage capacitor lines. A first drive unit, connected to the plurality of storage capacitor lines, selectively applies a storage capacitor potential to the plurality of storage capacitor lines. A second drive unit, connected to the plurality of data lines, alternately provides an image data signal having a positive polarity and an image data signal having a negative polarity to the plurality of data lines. The second drive unit selects some of the data lines so that an equal number of image data signals having a positive polarity and image data signals having a negative polarity are provided to the selected data lines. The second drive unit simultaneously provides the selected data lines with the image data signals having a positive polarity and the image data signals having a negative polarity.

Other aspects and advantages of the present invention will become apparent from the following description, taken in conjunction with the accompanying drawings, illustrating by way of example the principles of the invention.

The invention and preferred objects and advantages thereof, may best be understood by reference to the following description of the certain exemplifying embodiments together with the accompanying drawings in which:

Fig. 1 is a schematic diagram of an LCD device in the prior art;
Figs. 2(A) and 2(B) are waveform diagrams showing methods for driving pixels of the LCD device shown in Fig. 1;
Fig. 3 is a schematic block circuit diagram of an LCD device according to a first embodiment of the present invention;
Fig. 4 is a schematic circuit diagram of an image display unit and a storage capacitor driver incorporated in the LCD device of Fig. 3;
Fig. 5 is a waveform diagram showing a method for driving the LCD device of Fig. 3;
Figs. 6(A) to 6(E) are diagrams showing a first example of a method for providing an image data signal to the LCD device of Fig. 3;
Figs. 7(A) to 7(E) are diagrams showing a second example of a method for providing an image data signal to the LCD device of Fig. 3; and
Fig. 8 is a schematic circuit diagram of an active matrix LCD device according to a second embodiment of the present invention.

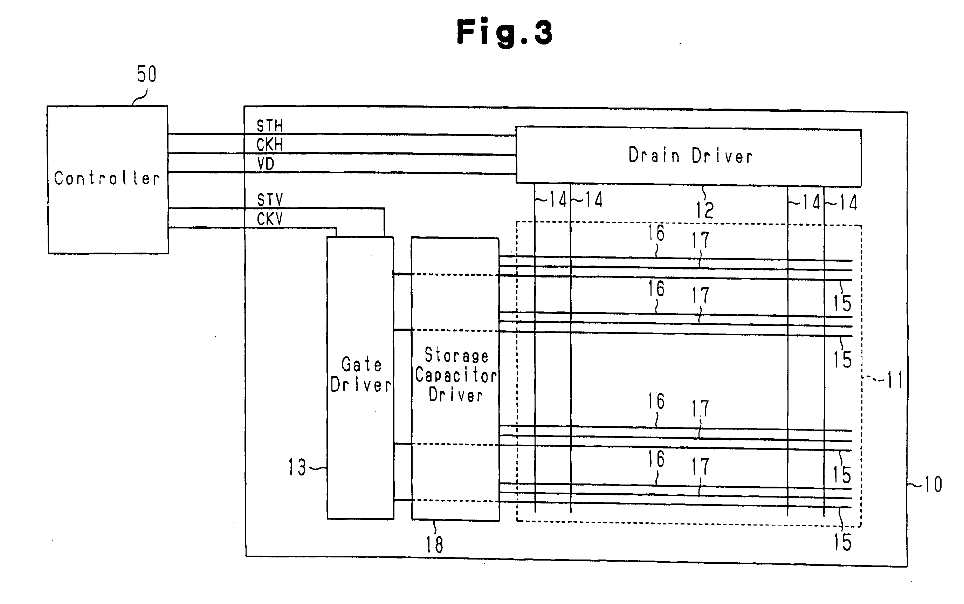

A liquid crystal display (LCD) device according to a first embodiment of the present invention will now be described with reference to Figs. 3 to 7. In the LCD device of the first embodiment that performs storage capacitor driving, the method for providing image data signals is improved so as to prevent defective image display that may be caused by capacitive coupling between data lines and storage capacitor lines.

Fig. 3 shows the entire configuration of the LCD device in the first embodiment. A liquid crystal panel 10 of the LCD device in the first embodiment includes an image display unit 11, a drain driver 12, a gate driver 13, and a storage capacitor driver 18.

The image display unit 11 includes a plurality of drain lines 14 and a plurality of gate lines 15 that intersect one another. The drain lines 14 are data lines for providing image data signals to a plurality of pixel electrodes. A first storage capacitor line 16 and a second storage capacitor line 17 are arranged in parallel with each gate line 15. The drain lines 14 are connected to the drain driver 12. The gate lines 15 are connected to the gate driver 13. The first and second storage capacitor lines 16 and 17 are connected to the storage capacitor driver 18.

The drain driver 12 is provided with a horizontal start signal STH, a horizontal clock signal CKH, and a video signal VD from a controller 50. The controller 50 is arranged external to the liquid crystal panel 10. In response to the horizontal start signal STH, the drain driver 12 sequentially samples image data that is to be provided to each drain line 14 based on the video signal VD in synchronization with the horizontal clock signal CKH. The drain driver 12 sequentially provides each drain line 14 with a write signal for writing data to each pixel electrode in accordance with the sampled image data in a predetermined pattern. In other words, the drain driver 12 sequentially provides each drain line 14 with an image data signal.

The drain driver 12 alternately provides image data signals having opposite polarities to the drain lines 14 in the order in which the drain lines 14 are arranged. More specifically, when an image data signal having a positive polarity is provided to one drain line 14, image data signals having a negative polarity are provided to drain lines 14 on each side of that one drain line 14, or to the drain lines 14 adjacent to that one drain line 14. Further, for each frame, the drain driver 12 alternately inverts the polarity of the image data signal that is to be provided to each drain line 14. In this way, the LCD device performs the dot inversion driving with the pixel electrodes.

The gate driver 13 is provided with a vertical start signal STV and a vertical clock signal CKV from the controller 50 of the liquid crystal panel 10. In response to the vertical start signal STV, the gate driver 13 sequentially applies gate signals to the gate lines 15 from the gate line 15 of the first stage toward the gate line 15 of the final stage in synchronization with the vertical clock signal CKV.

The storage capacitor driver 18 applies storage capacitor potentials Vsc1 and Vsc2 to the first and second storage capacitor lines 16 and 17, respectively. The storage capacitor driver 18 selectively switches each of the storage capacitor potentials Vsc1 and Vsc2 between, for example, a high potential level (H level) Vsch and a low potential level (L level) Vscl. The level Vsch is higher than an opposing electrode potential Vcom, which is a constant potential of an opposing electrode. The level Vscl is lower than the opposing electrode potential Vcom. The levels of these potentials (Vsc1, Vsc2, and Vcom) are not necessarily limited in the manners described above.

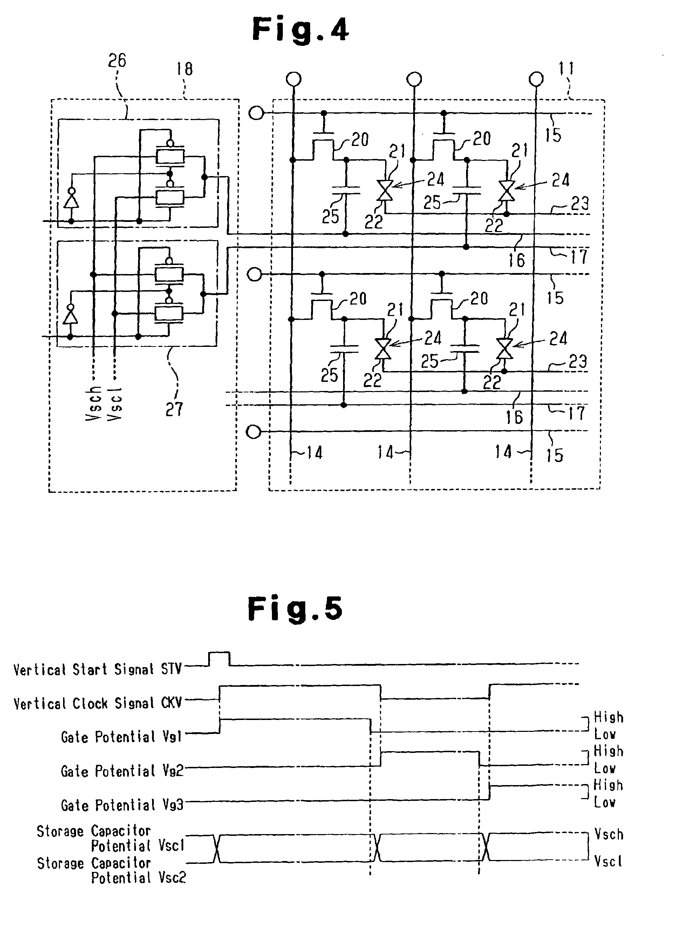

Fig. 4 shows the circuit configuration of the image display unit 11 and the storage capacitor driver 18.

A switching element 20 and a pixel electrode 21 are arranged at each intersection of the drain lines 14 and the gate lines 15. The switching element 20 may be a thin film transistor (TFT). Each switching element 20 has a gate connected to the corresponding gate line 15, a source connected to the corresponding pixel electrode 21, and a drain connected to the corresponding drain line 14. A substrate on which the plurality of pixel electrodes 21 are formed are opposed to a substrate on which a plurality of opposing electrodes 22 with liquid crystal material arranged in between. Each opposing electrode 22 is connected to a common line 23 to which the opposing electrode potential Vcom is applied. Each pixel electrode 21 and its opposing electrode 22 form a liquid crystal capacitor 24.

A storage capacitor 25 is connected to each pixel electrode 21. The storage capacitor 25 has a first electrode connected to the pixel electrode 21 and a second electrode connected to the corresponding one of the first and second storage capacitor lines 16 and 17. The storage capacitor lines 16 and 17, which are connected to the storage capacitors 25, are arranged alternately in the row and column directions of the pixel array.

In the image display device, the pixel electrodes 21 corresponding to red (R), green (G), and blue (B) are arranged sequentially on each gate line 15. Each set of pixel electrodes 21 for three colors forms one pixel.

The storage capacitor driver 18 includes a first switching circuit 26 connected to the corresponding first storage capacitor line 16 and a second switching circuit 27 connected to the corresponding second storage capacitor line 17. The switching circuit 26 is formed to apply a potential having an H level Vsch or a potential having an L level Vscl to the corresponding first storage capacitor line 16. The switching circuit 27 is formed to apply a potential having an H level Vsch or a potential having an L level Vscl to the corresponding second storage capacitor line 17.

The operation of the LCD device will now be described with reference to Fig. 5. Fig. 5 shows the vertical start signal STV, the vertical clock signal CKV, the potentials (gate potentials Vg1 to Vg3) of the gate lines 15 in the first to third rows from the top stage, and the potentials (storage capacitor potentials Vsc1 and Vsc2) of the first and second storage capacitor lines 16 and 17.

When the vertical start signal STV rises, image display for the present frame is started. In response to a rise of the first pulse of the vertical clock signal CKV, the potential (gate potential) Vg1 of the first gate line 15 rises from a low potential level (L level) to a high potential level (H level). As a result, the source and drain are connected in the switching element 20 of each pixel electrode 21 that is arranged on the first gate line 15. In the first embodiment, the gate potential that has risen to an H level is applied as a drive potential to the switching element 20 via the gate line 15. This connects the drain line 14, which is a data line, and the pixel electrode 21.

During a period in which the gate potential Vg1 has an H level, image data signals Vd are sequentially provided to the pixel electrodes 21 that are connected to the first gate line 15 via the drain line 14. Image data signals having a positive polarity are provided to pixel electrodes 21 that are connected to the first storage capacitor line 16 via the storage capacitor 25. Image data signals having a negative polarity are provided to pixel electrodes 21 that are connected to the second storage capacitor line 17 via the storage capacitor 25. Then, the gate potential Vg1 falls to an L level.

Immediately after the fall of the gate potential Vg1, the storage capacitor potentials Vsc1 and Vsc2 change. The storage capacitor potential Vsc1 of the first storage capacitor line 16 changes from an L level Vscl to an H level Vsch. The storage capacitor potential Vsc2 of the second storage capacitor line 17 changes from an H level Vsch to an L level Vscl. The changes in the storage capacitor potentials Vsc1 and Vsc2 cause charge to be redistributed between the liquid crystal capacitor 24 and the storage capacitor 25 so that the pixel potential Vp shifts to a high potential or a low potential. This amplifies the pixel potential Vp charged in each pixel electrode 21. Each pixel electrode 21 holds the amplified pixel potential Vp until the gate potential Vg1 rises next time, or for a single frame period.

When the following vertical clock signal CKV falls, the gate potential Vg2 of the second gate line 15 rises from an L level to an H level. This connects the source and drain in the switching element 20 of each pixel electrode 21 that are on the second gate line 15 so that the image data signals Vd are sequentially provided to the pixel electrodes 21 via the drain line 14. Then, the gate potential Vg2 falls to an L level. Immediately afterward, the storage capacitor potentials Vsc1 and Vsc2 change. The storage capacitor potential Vsc1 changes from an H level Vsch to an L level Vschl. The storage capacitor potential Vsc2 changes from an L level Vscl to an H level Vsch.

When the vertical clock signal CKV rises next, the gate potential Vg3 of the third gate line 15 rises to an H level. Then, the image display operation is performed for each gate line 15 in the same manner as described above.

The drain driver 12 in the LCD device of the first embodiment selects the drain lines 14 in a manner so that the drain lines 14 are simultaneously provided with the same number of image data signals Vd having a positive polarity and image data signals Vd having a negative polarity. The drain driver 12 provides the image data signals Vd to the pixel electrodes 21 during the period in which the gate potential has an H level. Even in this case, capacitive coupling occurs at the intersections between the drain lines 14 and the storage capacitor lines 16 and 17. This locally changes the potentials at the storage capacitor lines 16 and 17. In detail, the potentials at the storage capacitor lines 16 and 17 change locally and become high at the intersections with the drain lines 14, which provide image data signals having a positive polarity. The potentials of the storage capacitor lines 16 and 17 change locally and become low at the intersections with the drain lines 14, which provide image data signals having a negative polarity.

However, in the first embodiment, the number of the intersections at which the potential becomes high is the same as the number of the intersections at which the potential becomes low. Thus, the influence of the potential that becomes high and the influence of the potential that becomes low offset each other so as to smooth the potentials of the storage capacitor lines 16 and 17. As a result, the potential change is reduced for the entirety of the storage capacitor lines 16 and 17. The reasons for this will now be described in detail.

The number of intersections at which the drain lines 14, provided with image data signals having a positive polarity, intersect the storage capacitor lines 16 and 17 is represented by n. A parasitic capacitor formed by capacitive coupling occurring at each of these intersections is represented by Cpa. Further, the amounts of potential change in the drain lines 14 are represented by $\Delta VU1, LVU2,... \Delta VUn$. The number of intersections at which the drain lines 14, provided with image data signals having a negative polarity, intersect the storage capacitor lines 16 and 17 is represented by m. A parasitic capacitor formed by capacitive coupling occurring at each of these intersections is represented by Cpa. Further, the amounts of potential change in the drain lines 14 are represented by $\Delta VD1, \Delta VD2,... \Delta VDm$.

In this case, when the entire capacity of the storage capacitor lines 16 and 17 is represented by Call, the entire potential change amount $\Delta Vsc$ of the storage capacitor lines 16 and 17 caused by capacitive coupling that occurs between the drain lines 14 and the storage capacitor lines 16 and 17 is indicated by the expression shown below.

$$\Delta Vsc = \{(\Delta VU1 + \Delta VU2 + \ldots + \Delta VUn + \Delta VD1 + \Delta VD2 + \ldots + \Delta VDm) * Cpa\} / Call$$

The average value of the potential change amounts $\Delta VU1, \Delta VU2,... \Delta VUm$ at the intersections where the potential becomes high is represented by $\Delta VUave$. The average value of the potential change amounts $\Delta VD1, \Delta VD2, ... \Delta VDm$ at the intersections where the potential becomes low is represented by $\Delta VDave$. When using the average values $\Delta VUave$ and $\Delta VDave$, the entire potential change amount $\Delta Vsc$ of the storage capacitor lines 16 and 17 is indicated by the expression shown below.

$$\Delta Vsc = (n * \Delta VUave + m * \Delta VDave) * Cpa / Call$$

In the first embodiment, the number of image data signals having a positive polarity is equal to the number of simultaneously provided image data signals that have a negative polarity (n = m). Further, $\Delta VUave \approx -\Delta VDave$ is satisfied in an average image. Thus, the entire potential change amount $\Delta Vsc$ of the storage capacitor lines 16 and 17 is substantially zero ($\Delta Vsc \approx 0$) when the image display device of the first embodiment displays an average image.

In the first embodiment, the operation of providing image data signals Vd may specifically be performed in the manner described below.

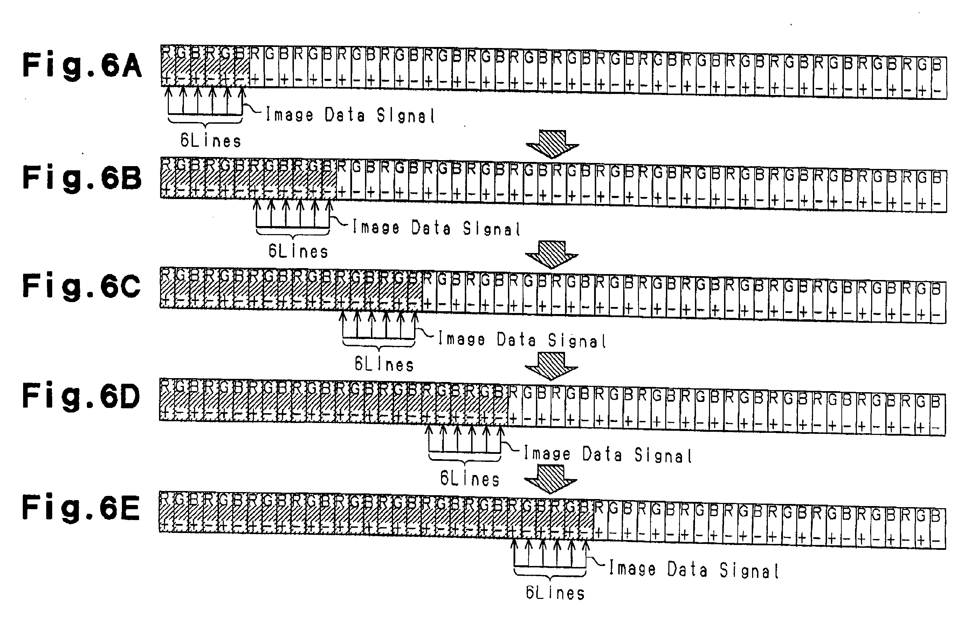

Fig. 6 shows an example of a case employing a scanning method, in which image data signals Vd are provided to pixel electrodes 21 in accordance with the sampling order. With the scanning method, an even number of drain lines 14 from the leftmost column (one end of the array) are selected at the same time to simultaneously provide the image data signals. As a result, the number of image data signals Vd having a positive polarity becomes equal to the number of simultaneously provided image data signals Vd having a negative polarity.

In the example shown in Fig. 6, the drain driver 12 selects six drain lines 14 at a time from the leftmost column in the line arrangement and simultaneously provides image data signals to the selected drain lines. In a first step, image data signals are provided simultaneously to the first to sixth drain lines 14 as shown in Fig. 6(A). Subsequently, image data signals are provided simultaneously to the seventh to twelfth drain lines 14 in the second step, the thirteenth to eighteenth drain lines 14 in the third step, the nineteenth to twenty-fourth drain lines 14 in the fourth step, and the twenty-fifth to thirtieth drain lines 14 in the fifth step as shown in Figs. 6(B) to 6(E).

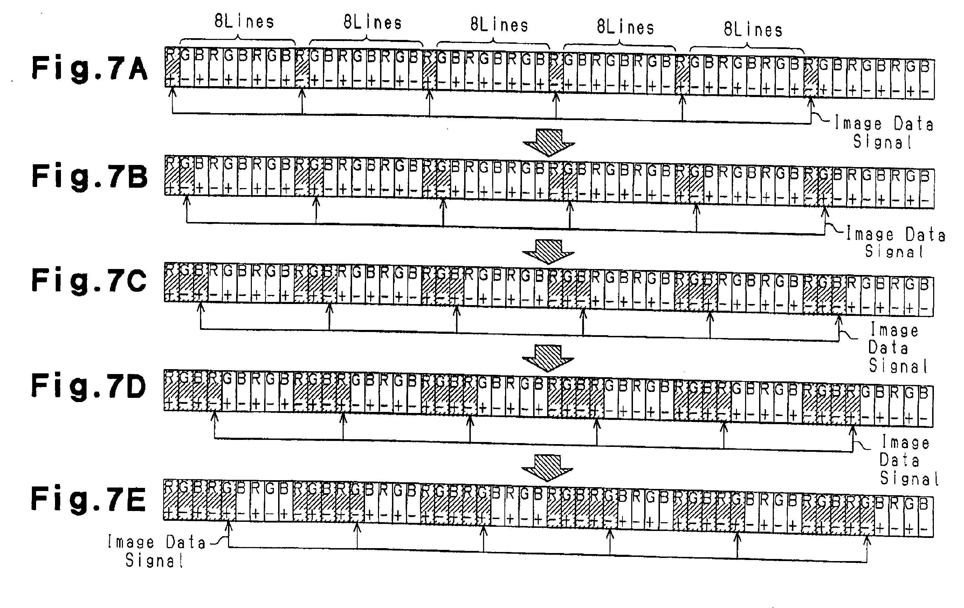

Fig. 7 shows an example of a case employing a multiplexer method in which image data signals Vd are provided to the pixel electrodes 21 after all of the image data is sampled in the horizontal cycle. With the multiplexer method, an even number of drain lines 14 that are arranged at intervals of an even number of lines are sequentially selected at a time as the drain lines 14 that are simultaneously provided with the image data signals. As a result, the number of image data signals Vd having a positive polarity becomes equal to the number of simultaneously provided image data signals Vd having a negative polarity.

In the example shown in Fig. 7, the drain driver 12 selects six drain lines 14 arranged in intervals of eight lines at a time and simultaneously provides image data signals to the selected drain lines. In the first step, image data signals are provided simultaneously to the first, ninth, seventeenth, twenty-fifth, thirty-third, and fourth-first drain lines 14 as shown in Fig. 7(A). In the second step, as shown in Fig. 7(B), image data signals are provided simultaneously to the second, tenth, eighteenth, twenty-sixth, thirty-fourth, and forty-second drain lines 14, which are each shifted to the right by one line from the drain lines 14 selected in the first step. In each of the third and subsequent steps, image data signals are simultaneously provided to selected drain lines 14 that are shifted to the right by one line from the lines selected in its preceding step as shown in Figs 7(C) to 7(E).

The method for selecting the drain lines 14 in a manner such that the number of image data signals having a positive polarity becomes equal to the number of simultaneously provided image data signals having a negative polarity should not be limited to the specific method described above. There are many other ways to select the drain lines 14 in this manner. The other methods also reduce the potential changes of the storage capacitor lines 16 and 17 that may be caused by capacitive coupling occurring when image data signals are provided.

Depending on the total number of the drain lines 14, some drain lines 14 may remain unselected when the drain lines 14 are selected in a manner that the number of image data signals having a positive polarity becomes equal to the number of simultaneously provided image data signals having a negative polarity. In this case, providing an equal number of image data signals having a positive polarity and image data signals having a negative polarity in all the writing steps may not be possible. In particular, when the number of pixel electrodes 21 connected to a gate line 15 is an odd number, one image data signal provided to the final pixel electrode 21 of the gate line 15 may have no image data signal having an opposite polarity that it can be paired with. Even in this case, the drain driver 12 tries to select the drain lines 14 to its utmost extent in a manner that an equal number of image data signals having a positive polarity and image data signals having a negative polarity are provided. This sufficiently reduces defective image display that may be caused by capacitive coupling between the drain lines 14 and the storage capacitor lines 16 and 16 as described above.

In the first embodiment, each of the switching circuits 26 and 27 in the storage capacitor driver 18 functions as a storage capacitor potential switching unit for selectively switching the potential applied to the storage capacitor lines 16 and 17.

The LCD device of the first embodiment has the advantages described below.

The LCD device of the first embodiment selects the drain lines 14 in a manner that an equal number of image data signals having a positive polarity and image data signals having a negative polarity are simultaneously provided to the pixel electrodes 21. Thus, local potential changes to a high level and local potential changes to a low level that may be caused by capacitive coupling between the drain lines 14 and the storage capacitor lines 16 and 17 offset each other. As a result, potential changes are decreased in the entirety of the storage capacitor lines 16 and 17. This prevents defective image display that may be caused by capacitive coupling.

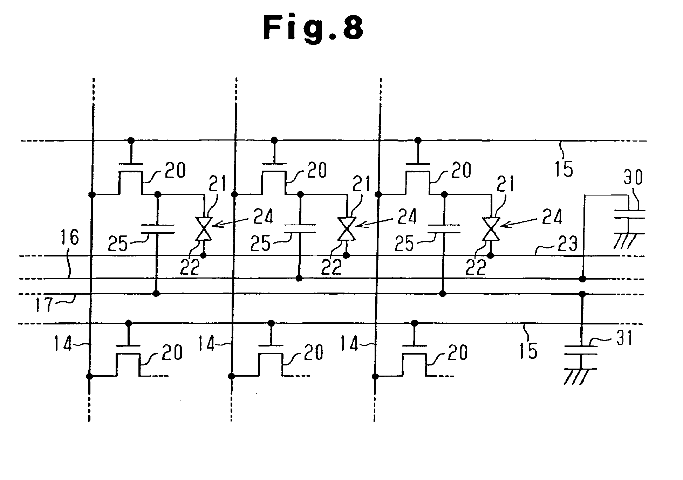

An LCD device according to a second embodiment of the present invention will now be described with reference to Fig. 8. The second embodiment will be described focusing on differences from the first embodiment. In addition to the method of the first embodiment for providing the image data signals, the second embodiment also has an improvement in the circuit configuration of the LCD device to further decrease the potential changes of the storage capacitor lines that may be caused by capacitive coupling.

Fig. 8 shows a circuit configuration of an image display unit in the LCD device of the second embodiment. The LCD device of the second embodiment includes an additional capacitor 30 connected to a first storage capacitor line 16 and an additional capacitor 31 connected to a second storage capacitor line 17.

The capacitors 30 and 31 are connected to the storage capacitor lines 16 and 17, respectively, so as to increase the entire capacitance of each of the storage capacitor lines 16 and 17. As a result, the potential changes that may be caused by capacitive coupling between the drain lines 14 and the storage capacitor lines 16 and 17 are further decreased.

It should be apparent to those skilled in the art that the present invention may be embodied in many other specific forms. Therefore, the present examples and embodiments are to be considered as illustrative and not restrictive.

**Claims**

1. A liquid crystal display device comprising a plurality of data lines, a plurality of gate lines intersecting the plurality of data lines, a plurality of pixel electrodes respectively arranged at intersections between the plurality of data lines and the plurality of gate lines, a plurality of switching elements, each including a control terminal connected to a corresponding one of the plurality of gate lines, a first terminal connected to a corresponding one of the plurality of pixel electrodes, and a second terminal connected to a corresponding one of the plurality of data lines, a plurality of storage capacitor lines respectively corresponding to the plurality of gate lines, a plurality of storage capacitors, each including a first capacitor electrode connected to a corresponding one of the plurality of pixel electrodes and a second capacitor electrode connected to a corresponding one of the plurality of storage capacitor lines, and a first drive unit, connected to the plurality of storage capacitor lines, for selectively applying a storage capacitor potential to the plurality of storage capacitor lines, the liquid crystal display device
**characterized by**
a second drive unit, connected to the plurality of data lines, for alternately providing an image data signal having a positive polarity and an image data signal having a negative polarity to the plurality of data lines, wherein the second drive unit selects some of the data lines so that an equal number of image data signals having a positive polarity and image data signals having a negative polarity are provided to the selected data lines, the second drive unit simultaneously providing the selected data lines with the image data signals having a positive polarity and the image data signals having a negative polarity.

2. The liquid crystal display device according to claim 1, **characterized in that** the second drive unit selects some of the data lines in quantities that are an even number starting from a data line located at an end of the plurality of data lines.

3. The liquid crystal display device according to claim 1, **characterized in that** the second drive unit selects some of the data lines in quantities that are an even number at an interval of an even number of data lines.

4. The liquid crystal display device according to any one of claims 1 to 3, **characterized by**:

   a plurality of additional capacitors respectively connected to the plurality of storage capacitor lines.

5. The liquid crystal display device according to any one of claims 1 to 4, **characterized in that** the plurality of storage capacitor lines include first and second storage capacitor lines for each of the plurality of gate lines, and the plurality of storage capacitors include a first storage capacitor connected to each first storage capacitor line and a second storage capacitor connected to each second storage capacitor line.

6. The liquid crystal display device according to claim 5, **characterized in that** a plurality of sets of the first and second storage capacitors are connected so that the first and second storage capacitors are arranged alternately on the first and second storage capacitor lines.

7. The liquid crystal display device according to claim 5, **characterized in that** the first storage capacitor lines correspond to the data lines provided with the image data signals having a positive polarity, the second storage capacitor lines correspond to the data lines provided with the image data signals having a negative polarity, and the first drive unit applies a storage capacitor potential having a first level to the first storage capacitor lines and applies a storage capacitor potential having a second level differing from the first level to the second storage capacitor lines.

**Fig.1**

Storage Capacitor Driver

# Fig.2A

# Fig.2B

# Fig.3

EP 1 662 472 A2

# Fig.4

# Fig.5

Vertical Start Signal STV

Vertical Clock Signal CKV

Gate Potential Vg1 — High / Low

Gate Potential Vg2 — High / Low

Gate Potential Vg3 — High / Low

Storage Capacitor Potential Vsc1 — Vsch

Storage Capacitor Potential Vsc2 — Vscl

12

**Fig.6A**

Image Data Signal

6Lines

**Fig.6B**

Image Data Signal

6Lines

**Fig.6C**

Image Data Signal

6Lines

**Fig.6D**

Image Data Signal

6Lines

**Fig.6E**

Image Data Signal

6Lines

EP 1 662 472 A2

Fig.7A

Fig.7B

Fig.7C

Fig.7D

Fig.7E

# Fig.8